# EUROPÄISCHE PATENTSCHRIFT

(11) **EP 0 729 891 B1**
(45) Veröffentlichungstag und Bekanntmachung des Hinweises auf die Patenterteilung: **24.05.2000**
(21) Anmeldenummer: 96102946.9
(22) Anmeldetag: 28.02.1996
(51) Int. Cl.: B65D 1/02

(54) **Nachfülleinheit für einen Seifenspender**
Cartridge for soap dispenser
Cartouche pour distributeur de savon

(30) Priorität: 01.03.1995 DE 29503460 U
(43) Veröffentlichungstag der Anmeldung: 04.09.1996
(73) Patentinhaber: SCA Hygiene Products GmbH, 55246 Mainz-Kostheim (DE)
(72) Erfinder: Widera, Michael, D-65527 Niedernhausen (DE); Pohl, Matthias, D-55411 Bingen/Rhein (DE)
(74) Vertreter: Meyer-Roedern, Giso, Dr.

(56) Entgegenhaltungen:
- EP-A- 0 472 504
- WO-A-91/08146
- DE-A- 3 215 866
- US-A- 3 954 200
- US-A- 4 245 685
- US-A- 4 372 455
- US-A- 4 948 001

## Beschreibung

Die Erfindung betrifft eine Nachfülleinheit für einen Seifenspender in Form eines Flüssig- oder Cremeseife enthaltenden Flakons mit einem Gehäuse aus Kunststoff.

Das Gehäuse bekannter derartiger Flakons hat glatte Wände, die relativ dick sind, um dem gefüllten Flakon die erforderliche Formstabilität zu verleihen. Das Entsorgungsvolumen der Flakons ist groß, da sie sich aufgrund dieser ihrer Formstabilität im Leerzustand praktisch nicht komprimieren lassen. Der Kunststoffmaterialbedarf für die Flakons ist recht groß und ihr Gewicht recht hoch.

Ein Gehäuse mit eingeformten Sicken ist beispielsweise aus US-A-4 372 455 bekannt.

Aufgabe der Erfindung ist es, ein Nachfülleinheit für einen Seifenspender der eingangs genannten Art in Form eines Flakons zu schaffen, das bei weniger Materialeinsatz und niedrigerem Gewicht im gefüllten Zustand formstabil und im Leerzustand komprimierbar ist, so daß sich ein kleineres Entsorgungsvolumen ergibt.

Das diese Aufgabe erfindungsgemäß lösende Flakon hat mehrere in die Wand seines Gehäuses eingeformte Sicken.

Die Sicken ermöglichen es, die Wandstärke des Flakongehäuses verglichen mit einem Vorgängermodell etwa zu halbieren. Materialbedarf und Gewicht werden ebenfalls etwa halbiert. Die Wand ist so dünn, daß das Gehäuse ohne Sicken im gefüllten Zustand nicht formstabil wäre und nur durch Versteifung mit den Sicken die erforderliche Formstabilität erhält. Im Leerzustand läßt sich das Gehäuse mühelos auf etwa die Hälfte seines Volumens komprimieren. Das wegen leichterer Verformbarkeit dank reduzierter Wandstärke, die durch Versteifung mit den Sicken wettgemacht wird. Beim Komprimieren knautscht das Gehäuse an den Sicken ein, die so paradoxerweise nicht nur eine Stabilisierungsfunktion erfüllen, sondern zugleich als Sollknautschstellen zu einer leichteren Komprimierbarkeit des Gehäuses und einem geringeren Entsorgungsvolumen beitragen.

Die Sicken erstrecken sich in einer Ebene über den Umfang des Gehäuses, und zwar annähernd ringsum. Das ermöglicht ein einfaches Zusammendrücken des Gehäuses quer zu dieser Ebene. Das Gehäuse hat mehrere parallele Sicken, die ein zieharmonikaartiges in sich Zusammendrücken des Gehäuses ermöglichen.

Die Sicken weisen vorzugsweise in das Innere des Gehäuses hinein. Die Sicken haben vorzugsweise einen kreisrunden Boden und nach außen divergierende Seitenwände.

Bei einer bevorzugten Ausführungsform hat das Gehäuse einen vorzugsweise abgerundet rechteckigen Grundriß und einen Auslaßstutzen in der Mitte seiner Oberwand. Eine mittlere Sicke erstreckt sich in der Quermittelebene des Gehäuses fast ganz um das Gehäuse herum und bis dicht an den Auslaßstutzen heran. In symmetrischer Anordnung beidseits von der mittleren Sicke sind parallele äußere Sicke vorgesehen, die sich über Boden und Längsseitenwände des Gehäuses erstrecken. Ein oder mehrere Paare äußerer Sicken kommen gleichermaßen in Betracht.

Bei einer bevorzugten Ausführungsform hat der Auslaßstutzen ein Außengewinde, mit dem ein in bestimmen Spendertypen vorhandener Festziehhebel zusammenarbeitet. Das Gewinde ist vorzugsweise ein Trapezgewinde und an gegenüberliegenden Seiten parallel abgeplattet.

Die Mündung des Auslaßstutzen ist vorzugsweise mit Aluminiumfolie verschlossen. Das bedingt einen einzelteilarmen Aufbau und ein niedriges Gewicht. Die Aluminiumfolie läßt sich zur Wertstofftrennung leicht von dem Flakon lösen.

Bei einer bevorzugten Ausführungsform ist der Auslaßstutzen einstückig mit dem Flakongehäuse ausgebildet. Gehäuse und Auslaßstutzen bestehen vorzugsweise aus Polyethylen. Die die Mündung des Auslaßstutzens verschließende Aluminiumfolie ist mit Polyethylen bedampft und durch Heißprägen mit dem Auslaßstutzen verbunden. Damit gehen herstellungstechnische Vorteile einher. Ein Fachmann sieht die Bedampfung und Heißprägetechnik dem fertigen Produkt an.

Die Erfindung wird im folgenden anhand eines in der Zeichnung dargestellten Ausführungsbeispiels näher erläutert. Es zeigen:
- Fig. 1: die Vorderansicht eines Flakons für Flüssig- oder Cremeseife;
- Fig. 2: eine Seitenansicht des Flakons mit Blick in Richtung II von Fig. 1;
- Fig. 3: eine Draufsicht von oben auf das Flakon mit Blick in Richtung III von Fig. 1;
- Fig. 4: eine Draufsicht von unten auf das Flakon mit Blick in Richtung IV von Fig. 1; und
- Fig. 5: eine Einzelheit V von Fig. 3.

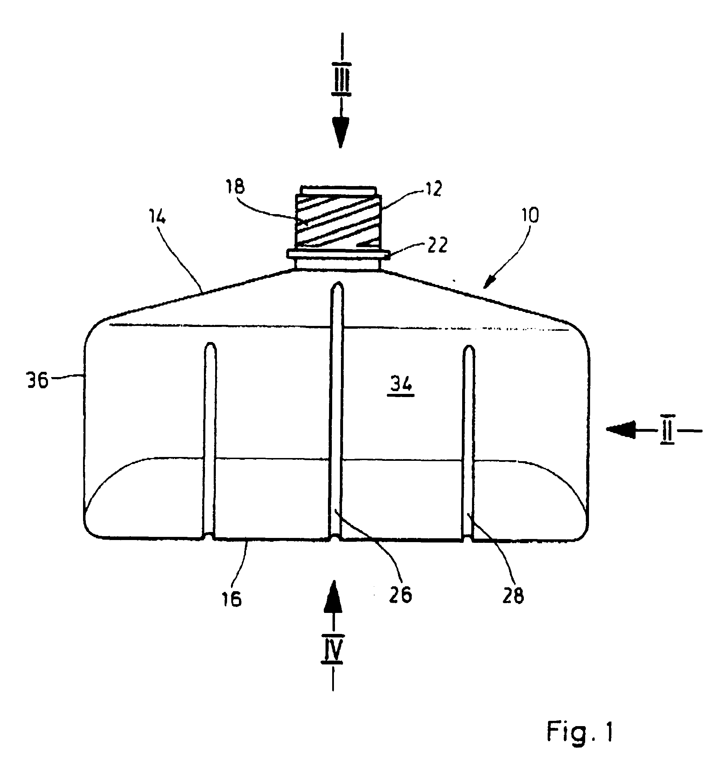

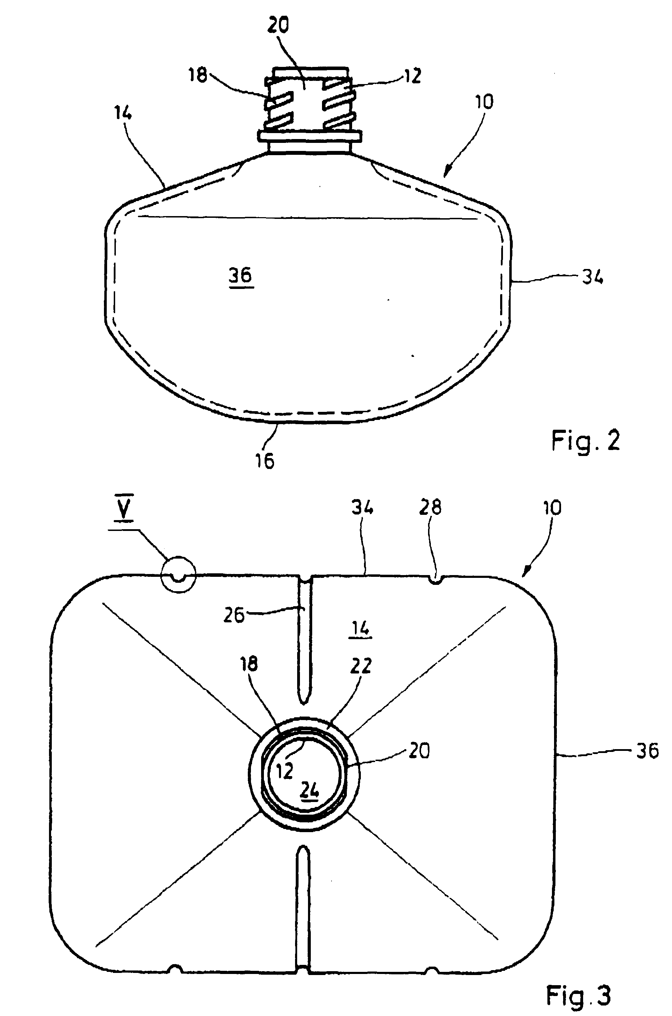

Die Zeichnungen Fig. 1 und Fig. 2 zeigen das Seifenflakon 10 in einem Befüll-, Transport- und Lagerzustand, in dem sein Auslaßstutzen 12 nach oben weist. Das Flakon 10 wird auf dem xopf stehend in einen Seifenspender eingesetzt, so daß sein Aulaßstutzen 12 nach unten weist. Die weitere Beschreibung bezieht sich auf den Befüll-, Transport- und Lagerzustand des Flakons 10.

Das Seifenflakon 10 hat ein Gehäuse aus Kunststoff, das im Grundriß rechteckig und an den Ecken gerundet ist. In Oberwandmitte des Gehäuses befindet sich der Auslaßstutzen 12, der einstückig an das Gehäuse angeformt ist. Die Oberwand 14 des Gehäuses steigt in Form einer flachen rechteckigen Pyramide zu dem Auslaßstutzen 12 hin an. Der Boden 16 des Gehäuses bildet eine flache, gerundete Kuppe mit einem Rundungsprofil, dessen Profilachse sich in Längsrichtung erstreckt.

Der Auslaßstutzen 12 ist kreiszylindrisch. Er hat ein Außengewinde 18, mit dem der Festziehhebel eines Seifenspenders zusammenarbeitet. Das Gewinde 18 ist ein an gegenüberliegenden Seiten parallel abgeplattetes Trapezgewinde. Die Aufschraubtiefe des Festziehhebels wird durch einen von dem Auslaßstutzen 12 radial nach außen abstehenden Flansch 22 begrenzt.

Der Seifenflakon 10 ist mit einer Flüssig- oder Cremeseife befüllt. In seinem Transport- und Lagerzustand ist die Mündung des Auslaßstutzen 12 mit Aluminiumfolie verschlossen. Gehäuse und Auslaßstutzen 12 des Seifenflakons 10 bestehen aus Polyethylen. Die Aluminiumfolie ist mit Polyethylen bedampft und durch Heißprägen mit dem Auslaßstutzen 12 verbunden, um diesen dicht zu verschließen. Bei Ingebrauchnahme wird die Aluminiumfolie mit einem Dorn durchstoßen.

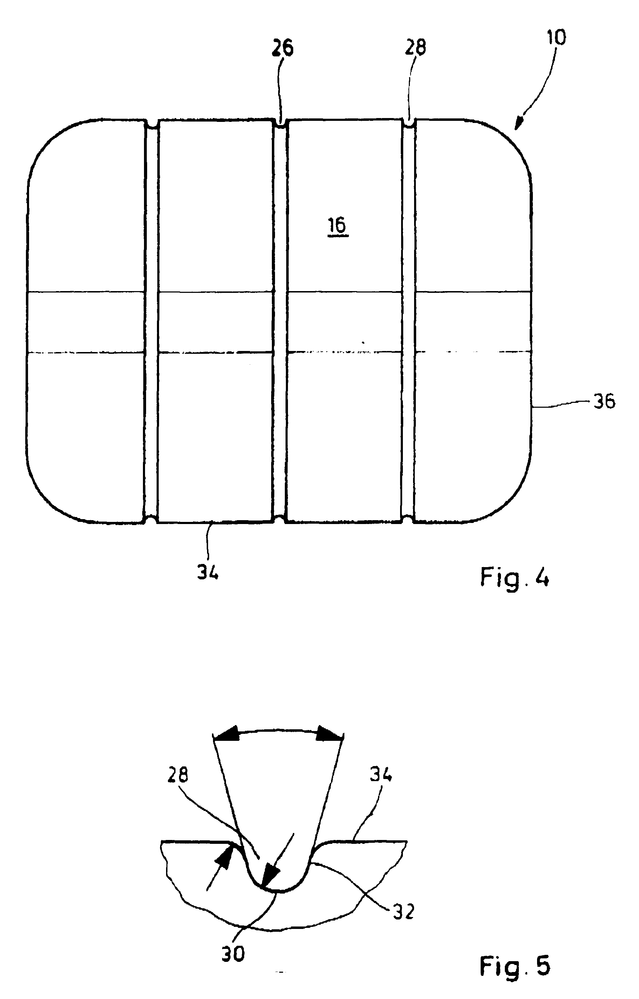

Das Gehäuse des Seifenflakons 10 hat drei in seine Wand eingeformte Sicken 26, 28, die geradlinig und parallel verlaufen. Die Sicken 26, 28 sind in das Gehäuse hineingerichtet. Sie haben einen kreisrunden Boden 30 und nach außen divergierende Seitenwände 32 (vgl. Fig. 5). Eine mittlere Sicke 26 erstreckt sich in der Quermittelebene des Gehäuses fast ganz um das Gehäuse herum und an der Oberwand 14 bis dicht an den Auslaßstutzen 12 heran. Zwei äußere Sicken 28 erstrecken sich in von der Quermittelebene gleich weit beabstandeten Querebenen beidseits von der mittleren Sicke 26 Über den Boden 16 und die Längsseitenwände 34, nicht aber über die Oberwand 14 des Gehäuses. Die Anordnung der äußeren Sicken 28 ist spiegelsymmetrisch zu der Quermittelebene des Gehäuses.

Ein aus Polyethylen bestehender Seifenflakon 10 der beschriebenen und dargestellten Art für ein Füllvolumen von 750 ml wiegt nur 25 ± 1 g. Seine Gehäusewände sind so dünn und flexibel, daß der gefüllte Seifenflakon 10 ohne die Sicken 26, 28 nicht formstabil wäre. Im entleerten Zustand läßt sich der Flakon 10 durch Zusammendrücken seiner Querseitenwände 36 mühelos auf die Hälfte seines Volumens komprimieren. Der Flakon 10 knautscht dabei an den Sicken 26, 28 ein.

## Patentansprüche

1. Nachfülleinheit für einen Seifenspender in Form eines Flüssig- oder Cremeseife enthaltenden Flakons mit einem Gehäuse aus Kunststoff, das einen abgerundet rechteckigen Grundriß und einen Auslaßstutzen (12) in der Mitte seiner Oberwand (14) hat, mit einer in die Wand des Gehäuses eingeformten mittleren Sicke (26), die sich in der Quermittelebene des Gehäuses fast ganz um das Gehäuse herum und an der Oberwand (14) bis dicht an den Auslaßstutzen (12) heran erstreckt, dadurch gekennzeichnet, daß in symmetrischer Anordnung beidseits der mittleren Sicke (26) parallele äußere Sicken (28) angeordnet sind, die sich über den Boden (16) und die Längsseitenwände (34) des Gehäuses erstrecken, wobei die Gehäusewände so dünn und flexibel sind, daß der gefüllte Flakon ohne die Sicken (26, 28) nicht formstabil wäre.

2. Nachfülleinheit nach Anspruch 1, dadurch gekennzeichnet, daß die Sicken (26, 28) in das Innere des Gehäuses weisen.

3. Nachfülleinheit nach einem der Ansprüche 1 oder 2, dadurch gekennzeichnet, daß die Sicken (26, 28) einen kreisrunden Boden (30) und nach außen divergierende Seitenwände (32) haben.

4. Nachfülleinheit nach einem der Ansprüche 1 bis 3, dadurch gekennzeichnet, daß der Auslaßstutzen (12) ein Außengewinde (18) hat.

5. Nachfülleinheit nach einem der Ansprüche 1 bis 4, dadurch gekennzeichnet, daß das Gewinde (18) des Auslaßstutzens (12) ein Trapezgewinde ist.

6. Nachfülleinheit nach einem der Ansprüche 1 bis 5, dadurch gekennzeichnet, daß das Gewinde (18) des Auslaßstutzens (12) an gegenüberliegenden Seiten parallel abgeplattet ist.

7. Nachfülleinheit nach einem der Ansprüche 1 bis 6, dadurch gekennzeichnet, daß die Mündung (24) des Auslaßstutzen (12) mit Aluminiumfolie verschlossen ist.

8. Nachfülleinheit nach einem der Ansprüche 1 bis 7, dadurch gekennzeichnet, daß der Auslaßstutzen (12) einstückig mit dem Gehäuse ausgebildet ist und aus Polyethylen besteht, und daß mit Polyethylen bedampfte Aluminiumfolie durch Heißprägen mit dem Auslaßstutzen (12) verbunden ist.

## Claims

1. A refill unit for a soap dispenser in the form of a bottle containing a liquid or cream soap, having a housing of plastics material which is of rounded rectangular plan view and has an outlet connector (12) in the centre of its upper wall (14), with a central bead (26) which is formed in the wall of the housing and which extends in the transverse central plane of the housing almost entirely around the housing and on the upper wall (14) extends close up to the outlet connector (12), characterised in that parallel outer beads (28) are disposed in a symmetrical arrangement on either side of the central bead (26), which beads (28) extend over the base (16) and over the longitudinal side walls (34) of the housing, wherein the housing walls are so thin and flexible that the filled bottle would not be dimensionally stable without the beads (26,28).

2. A refill unit according to Claim 1, characterised in that the beads (26,28) face into the interior of the housing.

3. A refill unit according to either Claim 1 or Claim 2, characterised in that the beads (26,28) have a circular bottom (30) and outwardly diverging side walls (32).

4. A refill unit according to any one of Claims 1 to 3, characterised in that the outlet connector (12) has an external thread (18).

5. A refill unit according to any one of Claims 1 to 4, characterised in that the thread (18) of the outlet connector (12) is a trapezoidal screw thread.

6. A refill unit according to any one of Claims 1 to 5, characterised in that the thread (18) of the outlet connector (12) is flattened parallel on opposite sides.

7. A refill unit according to any one of Claims 1 to 6, characterised in that the mouth (24) of the outlet connector (12) is sealed with aluminium foil.

8. A refill unit according to any one of Claims 1 to 7, characterised in that the outlet connector (12) is formed in one piece with the housing and consists of polyethylene, and in that aluminium foil, on which polyethylene has been vacuum-coated, is connected with the outlet connector (12) by hot-melting.

## Revendications

1. Cartouche pour un distributeur de savon, agencé sous la forme d'un flacon contenant du savon liquide ou du savon en crème, avec un corps en matière plastique qui présente une section de base rectangulaire arrondie et est pourvu d'un embout de sortie (12) au centre de sa paroi supérieure (14), avec une moulure médiane (26) aménagée dans la paroi du corps, qui s'étend dans le plan médian transversal du corps, quasiment sur tout le pourtour du corps et dans la paroi supérieure (14) jusqu'à proximité immédiate de l'embout de sortie (12), caractérisée par le fait que des moulures extérieures (28) parallèles, qui s'étendent dans le fond (16) et dans les parois des grands côtés (34) du corps sont disposées symétriquement de part et d'autre de la moulure médiane (26), les parois du corps étant si fines et si souples que le flacon plein, sans les moulures (26, 28), ne présenterait pas une forme stable.

2. Cartouche selon la revendication 1, caractérisée par le fait que les moulures (26, 28) sont tournées vers l'intérieur du corps.

3. Cartouche selon une des revendications 1 ou 2, caractérisée par le fait que les moulures (26, 28) ont un fond (30) rond et des parois latérales divergentes en direction de l'extérieur (32).

4. Cartouche selon une des revendications 1 à 3, caractérisée par le fait que l'embout de sortie (12) comporte un filetage extérieur (18).

5. Cartouche selon une des revendications 1 à 4, caractérisée par le fait que le filetage (18) de l'embout de sortie (12) est un filetage trapézoïdal.

6. Cartouche selon une des revendications 1 à 5, caractérisée par le fait que le filetage (18) de l'embout de sortie (12) sur des côtés opposés comporte des parties aplaties parallèles.

7. Cartouche selon une des revendications 1 à 6, caractérisée par le fait que l'embouchure (24) de l'embout de sortie (12) est fermée par un film d'aluminium.

8. Cartouche selon une des revendications 1 à 7, caractérisée par le fait que l'embout de sortie (12) est formé d'une pièce avec le corps et est réalisé en polyéthylène et par le fait que le film d'aluminium revêtu de polyéthylène est lié à l'embout de sortie (12) par scellage à chaud.
